# EUROPEAN PATENT SPECIFICATION

(11) **EP 3 465 858 B1**
(45) Date of publication and mention of the grant of the patent: **11.08.2021**
(21) Application number: 17757578.4
(22) Date of filing: 30.05.2017
(51) Int. Cl.: H02G 9/06, H02G 9/08

(54) **SYSTEM COMPRISING A CLAMPING DEVICE FOR PULLING CABLES**
STYSTEM UMFASSEND EINE KLEMME ZUM ZIEHEN VON KABEL
SYSTÈME COMPRENANT UNE PINCE POUR TIRER LE CÂBLE

(30) Priority: 30.05.2016 NO 20160919
(43) Date of publication of application: 10.04.2019
(73) Proprietor: Los Elektro AS, 5430 Bremnes (NO)
(72) Inventor: HÅVIK, Øystein, 5427 Urangsvåg (NO); SÆRSTEN, Per Oddmund, 5360 Koltveit (NO)
(74) Representative: Acapo AS
(86) International application number: PCT/NO2017/000015
(87) International publication number: WO 2017/209617

(56) References cited:
- EP-A1- 0 336 493
- EP-A1- 2 571 124
- WO-A1-97/12116
- DE-A1-102010 032 687
- FR-A- 1 587 706
- US-A1- 2008 279 635
- US-A1- 2015 001 354

## Description

### Area of the invention

The present invention relates to a system comprising a clamping device for receiving one or more high voltage cables, for pulling said cables through a borehole, as indicated in the preamble of claim 1.

### Background of the invention.

High voltage cables are normally held in stretches in the air over a land formation or in ditches in the ground. However, there has been a growing need to lay such cables in boreholes in rock formations or in the ground and soil. How to drill holes for laying cables is known, but the equipment presently available does not allow for pulling cables through long boreholes. For example, it is desirable to be able to pull such cables through boreholes which are several hundred metres long and also several kilometres long.

In order to pull such cables through long boreholes, it is important that the friction between the cable bundle and the interior borehole is low. Furthermore, in many cases it will also be important that the cables are in an ordered cable bundle. WO9712116 describes a coiled tubing friction reduces that decreases the friction experienced by the coiled tubing when run in a borehole.

EP2571124 describes a cable clamp with an insertion element for constriction of cables.

### Purpose of the present invention.

Thus it is an aim of the present invention to develop a clamping device that can hold several cables together in a bundle. Often there is also a need to transport other cables in addition to, or other than, high voltage cables by pulling through a borehole, and the clamp should therefore also comprise means for the simultaneous carrying of such cables, such as, for example, a fibre cable.

When pulling cables through long boreholes, such as horizontal, inclined, arched and vertical boreholes, friction forces between the cable bundle and the inside surface of the borehole arise. These frictional forces have until now not allowed for the pulling of cables through long boreholes without causing cable damage. Furthermore, it can also be a need to lay the cables in organised bundles such as when single-wire high voltage cables are laid in three-foil arrangement. It is therefore an aim of the invention to provide clamps which, while bundling together a number of cables, also cause reduced friction in the borehole. Thus, it is an aim of the invention that the clamps are either directly or indirectly equipped with friction reducing means.

When pulling cables through long boreholes or through boreholes with a steep incline, forces can be so great in the cables that they can be overloaded if the pulling is directly on the cable. Therefore, it is an aim of the invention to provide clamps, which can also directly or indirectly be attached to the cable so that parts of the pulling forces will go through the clamps, i.e. so that in practice one exerts forces at several points along the elongated length of the cable. Preferably, the clamps are evenly distributed along the longitudinal direction of the cable bundle.

It is an aim of the invention to provide a clamping system that allows the pulling of cables through long boreholes. The system must therefore;
1. Include friction reducing means (such as wheels) between clamps and the inner surface of the borehole, for transferring the cables in (and out of) the borehole
2. Avoid damage to the outer sheath of the cable when pulling.
3. Bundling of cable, such as for example in a three-foil arrangement. For example, for single-wire high voltage cables it is important that they are in a three-foil arrangement to reduce power loss.
4. Securing the cable set in case of short circuiting. That the system keeps the cables in position when a short circuit occurs in the cable set.
5. To be able to withdraw the cable set when a faulty system occurs or during renewal/upgrades on the installation.
6. Rails (mechanical reinforcement) can be used if the forces during pulling or during the operational phase become too large for the cables to be exclusively present in the clamps. Wheels can then be mounted on the rails to reduce friction during pulling. Use of rails means the clamps will be anchored to the rail

### Summary of the Invention

The present invention relates to a system comprising: a clamping device for receiving one or more high voltage cables for the pulling of said cables in a borehole and a coupling element for connecting a number of clamping device in the longitudinal direction of the cable, wherein the device is comprised of a clamping element; wherein the clamping element extends around said cables for constriction of said cables, and wherein the clamping element can be opened and closed, and that it can be folded in a closed position by a fastening and clamping device, and wherein the clamping element comprises a number of attachment points for attachment to the coupling element, wherein a number of friction reducing means is arranged on the exterior surface of the clamping element, characterized in that the device is comprised of an insertion element; where the insertion element is arranged radially on the outside of the cables and radially within the clamping element, and where the insertion element is given a shape adapted to receive different cables, and said coupling element comprises a number of friction reducing means, and the width of the coupling element, extends mainly radially outward from the longitudinally running axis of the cables when the coupling element is attached to the clamps and the cables and wherein the friction reducing means are a number of wheels.

Preferred embodiments of said device are set out in dependent claims 2-7.

In one embodiment, the insertion element has an arched shape adapted to the cables that shall be received in the clamp.

In one embodiment, said insertion element is made of a material that is more flexible or softer than the clamping device.

In one embodiment, the insertion element is made of a material which has a given elasticity so that the clamping forces which are exerted by the constriction of the clamping element cause the insertion element (24) to form an engagement with both the cables and the clamping element.

In one embodiment, there are a number of friction-reducing means provided on the exterior surface of the clamping element.

According to the invention, said friction reducing means are wheels.

In one embodiment, the shaft of said wheels is arranged adjoining to the clamping element so that the wheels extend through or are embedded in the clamping element and/or the insertion element.

According to the invention, the clamping unit comprises a number of attachment points for attachment to a coupling element for connecting a number of clamping devices in the longitudinal direction of the cable.

In one embodiment, the clamping device comprises a number of parts which are snap coupled or hinged together.

According to the invention, the clamping device can be opened and can be closed, and it can be folded into a closed position by a fastening and coupling element.

In one embodiment, the width of the coupling element stretches in the main radially outwards from the longitudinally running axis of the cable bundle, as the coupling element is fastened to the clamps and the cable bundle.

In one embodiment, said friction reducing means comprises a number of wheels, and the centre axis of said wheels is embedded in the coupling elements.

In one embodiment, said fastening and coupling means are adjustable with an adjustment screw, adapted to exert controlled pressure via the insertion element and cables.

In one embodiment, said insertion element consists of several parts.

### Description of the figures

Preferred embodiments of the invention will now be described in more detail with reference to the accompanying figures, where:
Figure 1 shows schematically in perspective an arrangement where clamps according to the invention are used to hold together a number of cables.
Figure 2 shows schematically in perspective a different arrangement where clamps according to the invention are used to hold together a number of cables.
Figure 3 shows schematically in perspective an embodiment of a clamp with friction reducing means.
Figure 4 shows schematically in cross section a cable arrangement with clamps, friction reducing means and coupling means.

### Description of preferred embodiments of the invention.

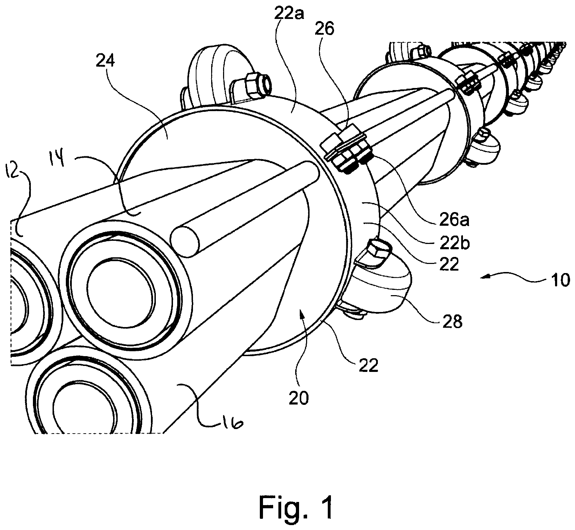

Figure 1 shows schematically in perspective an arrangement 10 for holding together a number of elongated cables. It is often required to bundle together three such cables 12, 14, 16, but the clamp 20 can be adapted to any number of cables. The clamp 20 can also be adapted to be attached to one cable only. However, the examples below show bundling of three cables 12, 14, 16.

In essence, the clamp 20 is comprised of two main elements, namely a clamping element 22 and an insertion element 24. The clamping element 22 extends around the cables which are to be bundled together. The insertion element 24 will ensure proper positioning of the cables in the clamp 20, and recesses are provided in the insertion element 24 for receiving the cables 12,14,16. When constricting the clamping element 22, pressure on the cables 12, 14, 16 is exerted through the insertion element 24.

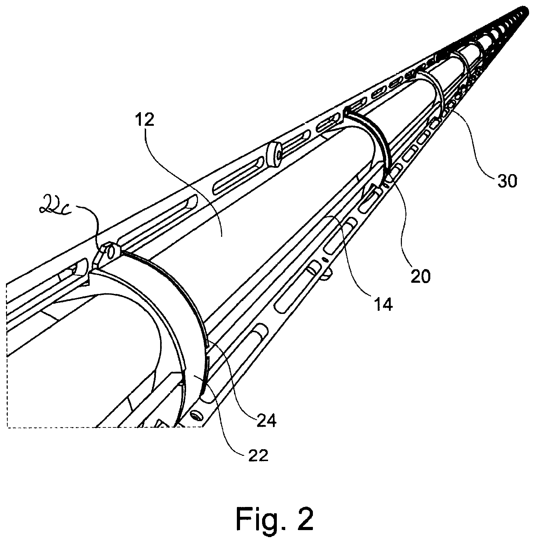

The clamping element 22 is constructed so that it can be opened and closed. Preferably, the clamping element 22 comprises two parts, a first part 22a and a second part 22b, which are hinged together (not shown in any detail in figures 1 and 2). In a closed position, as shown in figures 1 and 2, the two parts 22a, 22b are brought together by a fastening and clamping device 26. In the figure, conventional screws 26a are shown, but these may also be a fastening and clamping device 26 which allows adjustment of the distance between the parts 22a and 22b. The clamping element 22 is normally made of a relatively firm and rigid material, such as for example steel. Different variants of steel tape can be used. The clamping element 22 can also be composed of several parts, such as three or four or more, which are coupled together with the help of a snap-on fastener or a hinge. The clamping element 22 can also be constructed by one part only (for example, a steel tape) and is then sufficiently flexible so that it can be partially opened and closed (fastened and clamped).

The insertion element 24 is designed to receive parts of the cavity between the clamping element 24 and the cables, such as the three cables 12, 14 and 16 as shown in figure 1. It is not necessary that the entire cavity is filled. The insertion element 24 will, as the clamping element 22 is secured and clamped, transfer some of the clamping forces to the cables 12,14,16 so that these are held in the correct position in the clamp 20, both in relation to the longitudinal length of the cables and how the cables are positioned radially in the clamp 20 itself.

The insertion element 24 will normally be made of a more flexible material than the clamping element 22. Different materials can be used, but tests have shown that materials such as plastic or silicone rubber are suitable. As the insertion element 24 is somewhat more flexible than the clamping element 22, then forces from the clamping are transferred evenly and gently to the cables so that they are not damaged when the clamp 20 provides a strong engagement with the cables 12,14,16.

In some variants of the clamp 20, it is sufficient that the clamp 20 positions and holds the cables 12,14,16 together, and the actual pulling of the cables 12,14,16 through the borehole is accomplished by pulling on the actual cable or cable bundle. A number of clamps 20 distributed evenly spaced along the cable length will ensure that the cable does not touch the inner walls of the borehole when pulling. In other variants of the pulling through the boreholes, one will in addition to or exclusively, transmit the pulling forces to the cables indirectly via the clamps 20, i.e. one does not pull the cable 12,14,16 itself, or only parts of the pulling forces are applied to the cable, 12,14, 16 directly. A number of clamps 20 will ensure that one gets many engagements with the cable in the longitudinal direction, and the load on the cable 12,14,16 will not be as large. In these variants it is important to ensure a strong and adequate fastening and clamping of the clamp 20 to the cables 12, 14, 16 and this is ensured by a cooperation between the clamping element 22 and the insertion element 24.

The solution, according to the invention, results in great flexibility as the clamping element 22 can be made in a limited number of sizes, while one can easily make the insertion elements 24 in many more shapes and sizes. Thus one can use a clamping element 22 of a given size in several different cable dimensions 12, 14, 16 in that one adjusts the shape and size of the insertion element 24 to the relevant clamping element 22 and cables 12,14,16.

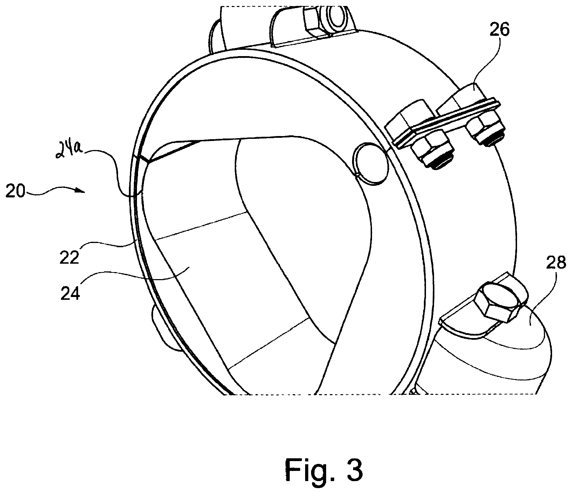

Figure 1 shows a solution where friction reducing means 28 is provided directly on the clamp 20. Figure 3 shows the clamp 20 of figure 1 in more detail. In the perspective outline two main elements are shown; namely, the clamping element 22 and the insertion element 24. The clamping element 22 is preferably provided with lugs so that they can be clamped together with a clamping device 26. Furthermore, one can see the clamping device 26 and a number of friction-reducing means 28.

Figure 2 shows an alternative embodiment of a number of clamps 20 which encloses a number of cables 12, 14,16. The insertion element 24 holds the cables in place, and the clamping element 22 clamps together the insertion element 24 against the cables.

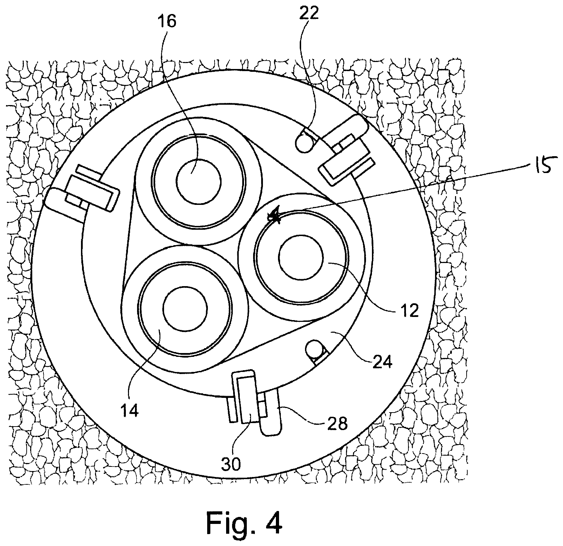

Figure 4 shows a cross section of clamp 20 as shown in the assembly in figure 2.

One can see how the cables 12,14,16 are held in place and clamped together by the insertion element 24. The clamping element 22, which extends along the entire perimeter of the insertion element 24, is shown only in part in the figure to illustrate that when, clamping together, it partially presses down in the more flexible and softer insertion element 24 so that an evenly distributed pressure is exerted against the cables 12,14,16.

The embodiment of the invention that is shown in figures 2 and 4 shows that the friction reducing means 28 is not arranged on the clamp 20, but is arranged on the coupling elements 30 which extend along the longitudinal direction of the cables 12,14,16, and which connects the various clamps 20 together. To connect clamps 20 together by means of coupling elements 30 (for example, rails 30) is important for embodiments where it is desirable to distribute the pulling forces (by pulling the cable through a borehole) evenly along the cable. Coupling elements 30 with friction reducing means 28 can, of course, be used if one wants to pull directly on the cable or cable bundle. It is preferred to use more than one coupling element 30, and an arrangement with two, three or fire longitudinal coupling elements, is often advantageous.

The insertion element 22 consists preferably of only one part, but can also be constructed of several parts. For example, one can use multiple parts, to obtain a better fitting for cables of a smaller circumference, i.e. one has a first member to accommodate a limited number of sizes/shapes of the clamping element 24, and then one has further insertion elements inside for adaption if the cables are thin. Furthermore, the insertion element 24 can be comprised of several sectors in the axial direction.

By pulling and positioning a number of cables in a borehole in a rock formation, it is also often required to lead other cables other than the power cables through the borehole. This may be for communication or to monitor the advancement and the shape of the borehole. In the insertion element 22 there are recesses adapted to accommodate such additional equipment, such as, for example, one or more fibre optic cables 32.

## Claims

1. A system comprising: a clamping device (20) for receiving one or more high voltage cables (12,14,16) for the pulling of said cables in a borehole and a coupling element (30) for connecting a number of clamping devices (20) in the longitudinal direction of the cable, wherein the device (20) is comprised of a clamping element (22); where the clamping element (22) extends around said cables (12,14,16) for constriction of said cables (12,14,16), and wherein the clamping element (22) can be opened and closed, and that it can be folded in a closed position by a fastening and clamping device (26), and wherein the clamping element (22) comprises a number of attachment points (22c) for attachment to the coupling element (30), wherein a number of friction reducing means (28) is arranged on the exterior surface of the coupling element (30), **characterized in that** the device is comprised of an insertion element (24), and wherein the insertion element (24) is arranged radially on the outside of the cables (12,14,16) and radially within the clamping element (22), and where the insertion element (24) is given a shape adapted to receive different cables (12,14,16), and the width of the coupling element (30), extends mainly radially outward from the longitudinally running axis of the cables when the coupling element (30) is attached to the clamps (20) and the cables, and wherein the friction reducing means (28) are a number of wheels (28).

2. System according to claim 1, **characterised in that** the insertion element (24) at in some sections is given an arched shape (24a) adapted to the cables (12,14,16) that shall be received and held together in the clamp (20).

3. System according to claim 1, **characterised in that** said insertion element (24) is made of a material that is more flexible or softer than the clamping element (22).

4. System according to claim 3, **characterised in that** the insertion element(24) is made of a material which has a certain elasticity so that the clamping forces that are exerted by the constriction of the clamping element (26) cause the insertion element (24) to engage with both the cables (12,14,16) and the clamping element (22).

5. System according to one of the claims 1 to 4, **characterised in that** the clamping element (22) consists of several parts which are snap-coupled or hinged together.

6. System according to claim 5, **characterised in that** said fastening and coupling means (26) is adjustable with an adjustment screw (26a) adapted to exert controlled pressure through the insertion element (24) against the cables (12, 14,16).

7. System according to one of the claims 1 to 6, **characterised in that** said insertion element (24) consists of several parts.

## Patentansprüche

1. System mit:
einer Klemmvorrichtung (20) zur Aufnahme von einem oder mehreren Hochspannungskabeln (12, 14, 16) zum Ziehen der Kabel in einem Bohrloch und einem Kopplungselement (30) zum Verbinden einer Anzahl von Klemmvorrichtungen (20) in Längsrichtung des Kabels,
wobei die Vorrichtung (20) aus einem Klemmelement (22) gebildet ist;
wobei sich das Klemmelement (22) um die Kabel (12, 14, 16) zur Eingrenzung der Kabel (12, 14, 16) erstreckt und wobei das Klemmelement (22) geöffnet und geschlossen werden kann, und wobei es in einer geschlossenen Position durch eine Befestigung- und Klemmeinrichtung (26) gefaltet werden kann, und wobei das Klemmelement (22) eine Anzahl von Befestigungspunkten (22c) zur Befestigung an dem Kopplungselement (30) aufweist,
wobei eine Anzahl von Reibungsreduktionsmitteln (28) auf der Außenfläche des Kopplungselements (30) angeordnet ist,
**dadurch gekennzeichnet, dass**
die Vorrichtung aus einem Einführungselement (24) gebildet ist, und wobei das Einführungselement (24) radial außen an den Kabeln (12, 14, 16) und radial innerhalb des Klemmelements (22) angeordnet ist, und wobei das Einführungselement (24) eine Form aufweist, die dazu eingerichtet ist, verschiedene Kabel (12, 14, 16) aufzunehmen, und wobei die Breite des Kopplungselements (30) sich hauptsächlich radial von der längs verlaufenden Achse der Kabel nach außen erstreckt, wenn das Kopplungselement (30) an den Klemmeinrichtungen (20) und den Kabeln befestigt ist, und wobei die Reibungsreduktionsmittel (28) eine Anzahl von Rädern (28) ist.

2. System nach Anspruch 1, **dadurch gekennzeichnet, dass** das Einführungselement (24) in einigen Abschnitten in einer gebogenen Form (24a) ausgebildet ist, die dazu eingerichtet ist, dass die Kabel (12, 14, 16) aufgenommen und in der Klemmeinrichtung (20) zusammengehalten werden.

3. System nach Anspruch 1, **dadurch gekennzeichnet, dass** das Einführungselement (24) aus einem Material gebildet ist, das flexibler und weicher ist als das Klemmelement (22).

4. System nach Anspruch 3, **dadurch gekennzeichnet, dass** das Einführungselement (24) aus einem Material ausgebildet ist, dass eine gewisse Elastizität aufweist, so dass die Klemmkräfte, die durch die Eingrenzung des Klemmelements (26) ausgeübt werden, bewirken, dass das Einführungselement (24) sowohl mit den Kabeln (12, 14, 16) als auch mit dem Klemmelement (22) ineinander greift.

5. System nach einem der Ansprüche 1 bis 4, **dadurch gekennzeichnet, dass** das Klemmelement (22) aus mehreren Abschnitten ausgebildet ist, die per Einrastverbindung oder gelenkig miteinander verbunden sind.

6. System nach Anspruch 5, **dadurch gekennzeichnet, dass** die Befestigung- und Klemmeinrichtung (26) mit einer einstellbaren Schraube (26a) einstellbar ist, die dazu eingerichtet ist, einen kontrollierten Druck durch das Einführungselement (24) auf die Kabel (12, 14, 16) auszuüben.

7. System nach einem der Ansprüche 1 bis 6, **dadurch gekennzeichnet, dass** das Einführungselement (24) aus mehreren Bestandteilen gebildet ist.

## Revendications

1. Système comprenant : un dispositif de serrage (20) pour recevoir un ou plusieurs câbles haute tension (12, 14, 16) pour tirer lesdits câbles dans un sondage et un élément de couplage (30) pour raccorder un certain nombre de dispositifs de serrage (20) dans la direction longitudinale du câble, dans lequel le dispositif (20) est composé d'un élément de serrage (22) ; où l'élément de serrage (22) s'étend autour desdits câbles (12, 14, 16) pour la constriction desdits câbles (12, 14, 16) et dans lequel l'élément de serrage (22) peut être ouvert et fermé, et en ce qu'il peut être plié dans une position fermée par un dispositif de fixation et de serrage (26), et dans lequel l'élément de serrage (22) comprend un certain nombre de points de fixation (22c) pour se fixer à l'élément de couplage (30),
dans lequel un certain nombre de moyens de réduction de friction (28) est agencé sur la surface extérieure de l'élément de couplage (30), **caractérisé en ce que** le dispositif est composé d'un élément d'insertion (24), et dans lequel l'élément d'insertion (24) est agencé radialement à l'extérieur des câbles (12, 14, 16) et radialement dans l'élément de serrage (22), et où l'élément d'insertion (24) bénéficie d'une forme adaptée pour recevoir différents câbles (12, 14, 16), et la largeur de l'élément de couplage (30) s'étend principalement radialement vers l'extérieur à partir de l'axe des câbles s'étendant longitudinalement lorsque l'élément de couplage (30) est fixé aux pinces (20) et aux câbles, et dans lequel les moyens de réduction de friction (28) sont un certain nombre de roues (28).

2. Système selon la revendication 1, **caractérisé en ce que** l'élément d'insertion (24), dans certaines sections, bénéficie d'une forme arquée (24a) adaptée aux câbles (12, 14, 16) qui doivent être reçus et maintenus ensemble dans la pince (20).

3. Système selon la revendication 1, **caractérisé en ce que** ledit élément d'insertion (24) est réalisé avec un matériau qui est plus flexible ou plus souple que l'élément de serrage (22).

4. Système selon la revendication 3, **caractérisé en ce que** l'élément d'insertion (24) est réalisé avec un matériau qui a une certaine élasticité de sorte que les forces de serrage qui sont exercées par la constriction de l'élément de serrage (26) amènent l'élément d'insertion (24) à se mettre en prise à la fois avec les câbles (12, 14, 16) et l'élément de serrage (22).

5. Système selon l'une des revendications 1 à 4, **caractérisé en ce que** l'élément de serrage (22) se compose de plusieurs parties qui sont couplées par encliquetage ou articulées ensemble.

6. Système selon la revendication 5, **caractérisé en ce que** ledit moyen de fixation et de couplage (26) est ajustable avec une vis d'ajustement (26a) adaptée pour exercer une pression contrôlée par le biais de l'élément d'insertion (24) contre les câbles (12, 14, 16).

7. Système selon l'une des revendications 1 à 6, **caractérisé en ce que** ledit élément d'insertion (24) se compose de plusieurs pièces.
